Europäisches Patentamt

European Patent Office

Office européen des brevets

(11) Veröffentlichungsnummer : **0 158 693**
**B1**

(12) · **EUROPÄISCHE PATENTSCHRIFT**

(45) Veröffentlichungstag der Patentschrift :
23.12.87

(51) Int. Cl.⁴ : **B 23 K 35/40**

(21) Anmeldenummer : 84104385.4

(22) Anmeldetag : 18.04.84

(54) Verfahren und Vorrichtung zur kontinuierlichen Herstellung eines Fülldrahtes.

(43) Veröffentlichungstag der Anmeldung :
23.10.85 Patentblatt 85/43

(45) Bekanntmachung des Hinweises auf die Patenterteilung : 23.12.87 Patentblatt 87/52

(84) Benannte Vertragsstaaten :
AT BE CH DE FR GB IT LI LU NL SE

(56) Entgegenhaltungen :
EP-A- 0 003 370
DE-C- 519 435
FR-A- 1 336 047
FR-A- 2 271 898
US-A- 1 950 525
US-A- 3 543 381

(73) Patentinhaber : Schweissindustrie Oerlikon Bührle
AG
Birchstrasse 230
CH-8050 Zürich (CH)

(72) Erfinder : Werner, Alexander
Talackerstrasse 90
CH-8152 Glattbrugg (CH)
Erfinder : Pfenninger, Heinz
Etzelweg 15
CH-8604 Volketswil (CH)

(74) Vertreter : EGLI-EUROPEAN PATENT ATTORNEYS
Horneggstrasse 4
CH-8008 Zürich (CH)

## Beschreibung

Die Erfindung betrifft ein Verfahren zur kontinuierlichen Herstellung eines aus einem Metallrohr und einer pulverförmigen Materialfüllung zusammengesetzten, geschweissten oder gefalzten Fülldrahtes beliebiger Länge, der aus einem metallischen Band als ein im Scheitel offenes Schlitzrohr geformt wird, in welches während seines kontinuierlichen Vorschubes das pulverförmige Material eingebracht und welches durch Stauchen und durch Schweissen oder Falzen seiner Längskanten zu einem, die Materialfüllung einschliessenden Rohr ausgebildet wird, das dann auf einen kleineren Durchmesser zur Bildung des Fülldrahtes reduziert wird, sowie eine Vorrichtung und eine Anlage zur Durchführung dieses Verfahrens.

Die Herstellung eines in einem kontinuierlichen Herstellungsverfahren geformten Fülldrahtes ist schon seit längerer Zeit bekannt. Mit den hierfür eingesetzten Anlagen ist es möglich, Fülldrähte beliebiger Länge und verschiedenen Aufbaues sowie für verschiedene Anwendungsgebiete zu erzeugen. Bei einem bekannten Verfahren (EP-A1-3 370) wird der Fülldraht als pulvergefülltes Rohr aus einem metallischen Band hergestellt, wobei zuerst das Band zu einer Rinne verformt wird, in welche das Pulver eingebracht wird, worauf die Rinne zu einem Rohr verformt und verschweisst wird. Hierbei werden auf das Rohr aufgesetzte Kontakte an einen HF-Generator angeschlossen. Der dadurch in das Rohr eingeleitete hochfrequente Strom konzentriert sich an den Längskanten der zu einem Rohr gepressten Rinne und erhitzt dieselben auf Schweisstemperatur. Nach dem Schweissen wird die durch das Schweissen am Rohr gebildete Schweissraupe eingeebnet und das Rohr kalibriert, bevor es durch eine Ziehoperation auf den Enddurchmesser verringert wird.

Mit diesem Verfahren und der entsprechenden Anlage können Fülldrähte mit verhältnismässig grosser Durchlaufgeschwindigkeit erzeugt werden. Als Nachteil ist aber anzusehen, dass das Herstellen einer einwandfreien Schweissung, wie sie für eine nachträglich galvanische Verkupferung des Fülldrahtes erforderlich ist, nicht zuverlässig erreicht werden kann.

Bei einem weiteren bekannten Verfahren (DE-A1-25 15 342) wird ebenfalls zur Bildung des rohrförmigen Drahtes ein Metallband zu einer Rinne geformt und mit dem pulverförmigen Material zur Bildung des Kerns gefüllt. Gleichzeitig wird in die Rinne ein Deckband mit einer Längsfaltung eingelegt. Die Rinne wird nun zum Rohr fertiggeformt und an den Längsrändern mit einem Schweissgerät geschweisst. Nach dem Schweissen wird das geschlossene Rohr durch einen Ziehvorgang auf den gewünschten Durchmesser verringert.

Durch die Verwendung eines Deckbandes soll verhindert werden, dass sich Teilchen des pulverförmigen Materials an den Längsrändern des zu schweissenden Rohres ansetzen und die Güte der Schweissung beeinträchtigen. Dies wird jedoch bei den üblichen Schweissgeschwindigkeiten nur unvollkommen erreicht, so dass auch hier keine zuverlässige Schweissung erreicht wird. Nachteilig ist weiter die ungleiche Materialverteilung in der Rohrwandung. Diese führt dazu, dass ein solcher Schweissstab beim Schweissen ausbiegen kann.

Die vorliegende Erfindung geht ebenfalls von der Herstellung eines fülldrahtes in einem kontinuierlichen Verfahren durch Verformung eines Metallbandes aus, jedoch besteht die Aufgabe der Erfindung darin, ein Verfahren der eingangs beschriebenen Art so auszugestalten, dass unter Vermeidung der Nachteile bei den bekannten Verfahren einwandfrei geschlossene oder gefalzte Fülldrähte mit hoher Produktionsgeschwindigkeit hergestellt werden können.

Diese Aufgabe wird gemäss der Erfindung dadurch gelöst, dass während des Schweissens oder Falzens des Rohres die im Schlitzrohr und im geschlossenen Rohr entstehenden Luftströmungen im Bereich der Schweiss- oder Falz-Zone abgesaugt werden.

Die Erfindung umfasst weiter eine Vorrichtung mit einer Schweiss- oder Falz-Station, mit der das erfindungsgemässe Verfahren in optimaler Weise durchgeführt werden kann. Diese Aufgabe wird dadurch gelöst, dass vor der Schweiss- oder Falz-Station mindestens eine Absaugvorrichtung angeordnet ist, deren Saugrohr über dem Ende des offenen Rohres liegt.

Die Erfindung ist in der Zeichnung in einem Ausführungsbeispiel dargestellt und nachfolgend beschrieben. Es zeigen :

Fig. 1 eine schematische Darstellung einer Anlage zur kontinuierlichen Herstellung von Fülldrähten,

Fig. 2 eine schematische Darstellung eines Teils der der Anlage nach Fig. 1 mit einer Dosier- und einer Schweissstation,

Fig. 3 einen Schnitt längs der Linie III-III in Fig. 2,

Fig. 4 eine Ansicht aus Richtung IV in Fig. 2,

Fig. 5 einen Schnitt längs der Linie V-V in Fig. 2 und

Fig. 6 einen Schnitt längs der Linie VI-VI in Fig. 2.

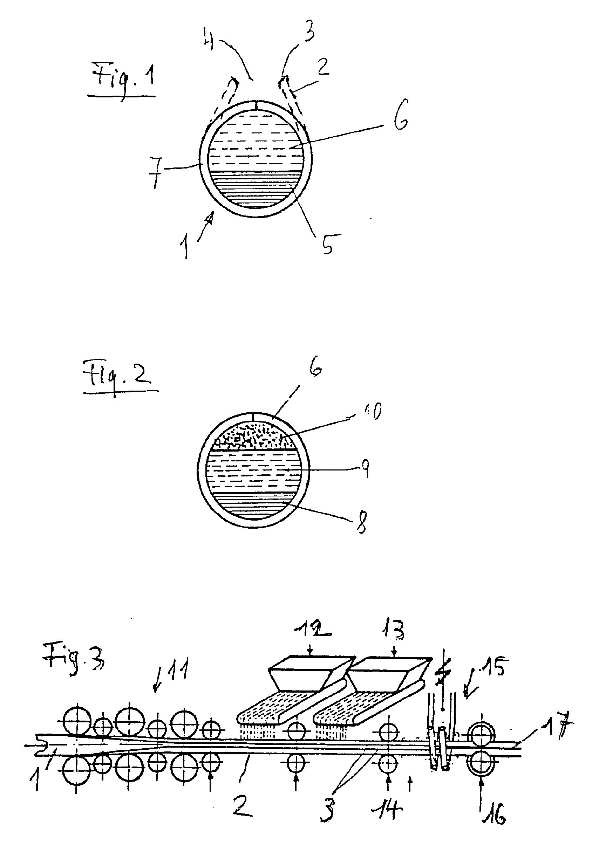

Die in Fig. 1 schematisch dargestellte Anlage zur kontinuierlichen Herstellung von Fülldrähten ist aus Platzgründen in drei Teile unterteilt, die durch Pfeile miteinander verbunden sind. In Wirklichkeit liegen alle Teile dieser Anlage auf einer Ebene und sind hintereinander angeordnet.

Von einer in einer Abwickelstation 1 drehbar gelagerten Metallbandrolle 2 wird ein Band 3 abgewickelt und einem Bandspeicher 4 zugeleitet. Eine Bandschweissvorrichtung 5 dient dazu, jeweils das Ende einer abgespulten Metallbandrolle 2 mit dem Anfang einer weiteren, bereitgestellten Metallbandrolle (nicht dargestellt) zu ver-

binden. Der Bandspeicher 4 dient dazu, Geschwindigkeitsänderungen in der Anlage aufzufangen. Das Band 3 wird in einer Rohrformmaschine 6 zu einem Schlitzrohr vorgeformt. Die Rohrformmaschine 6 besteht aus mehreren Walzenpaaren, mit denen das Formen des offenen Rohres 7 schrittweise durchgeführt wird.

Von der Rohrformmaschine 6 wird das offene Rohr 7 zu einer Dosierstation 8 geführt, die mit Pulverdosierwaagen 9, 10 ausgerüstet ist. Die Zahl der in der Dosierstation 8 aufgestellten Pulverdosierwaagen hängt davon ab, wieviel verschiedene Pulverkomponenten in das offene Rohr 7 eingefüllt werden sollen.

Von der Dosierstation 8 durchläuft das offene Rohr 7 eine Kalibrierstation 11 und anschliessend eine Schweissstation 12, die nachstehend noch eingehender beschrieben wird. In der Schweissstation 12 wird das offene Rohr 7 an seinen Längskanten auf Schweisstemperatur erhitzt und dann in einer Stauchwalzstation 13 verschweisst, die zwei Stauchwalzen 40, 41 aufweist (in Fig. 2 zur besseren Darstellung um 90° gedreht gezeichnet). Die Schweissstation 12 kann in verschiedener Weise ausgerüstet sein und beispielsweise mit einem in Fig. 1 schematisch dargestellten HF-Schweissgerät versehen sein. Es können jedoch auch andere Schweissgeräte, z. B. Widerstandsschweissgeräte o. dgl, eingesetzt werden.

In einer Spanschneidestation 14 wird an dem nun geschlossenen Rohr 15 die Schweissnaht eingeebnet, beispielsweise durch eine Hobeloperation. Zwischen der Stauchwalzstation 13 und der Spanschneidestation 14 kann noch eine Kühleinrichtung eingesetzt sein (nicht dargestellt). Die in der Anlage mit 16 bezeichneten Walzenpaare haben im wesentlichen Führungsfunktionen für das Schlitzrohr 7 und das geschlossene Rohr 15 zu übernehmen und werden nach Bedarf zwischen den einzelnen Stationen eingesetzt.

Vor dem Eintritt des mit der Pulverfüllung versehenen und geschlossenen Rohrs 15 in ein Streck-Reduzier-Walzwerk 17 wird das Rohr 15 in einem Emulsionsbecken 18 behandelt. Im Streck-Reduzier-Walzwerk 17 wird das Rohr in seinem Durchmesser verringert. Hierzu dienen eine Anzahl Walzgerüste 19, die in Gruppen oder separat angetrieben werden. Die Geschwindigkeit der Walzgerüste 19 kann nun so eingestellt werden, dass das Verhältnis zwischen Strecken und Reduzieren beliebig eingestellt werden kann. Weist beispielsweise das geschlossene Rohr 15 einen Durchmesser von 11-16 mm auf, kann im Streck-Reduzier-Walzwerk 17 ein Enddurchmesser von 3-5 mm erreicht werden. Dies entspricht in vielen Fällen bereits dem gewünschten Durchmesser des fertigen Fülldrahtes. Auch wenn verhältnismässig viele Walzgerüste 19 eingesetzt werden müssen, um diesen Enddurchmesser zu erreichen, liegt der Vorteil darin, dass mit wesentlich grösserer Durchlaufgeschwindigkeit des Rohres 15 gearbeitet werden kann und zudem Rohre mit einem weit grösseren Füllfaktorbereich, d. h. mit dem Verhältnis zwischen dem Rohrwerkstoff und dem eingebrachten Füllmaterial des Fülldrahtes,

hergestellt werden können.

Werden im Durchmesser kleinere Fülldrähte verlangt, schliesst an die Walzoperation eine Ziehoperation an. Hierzu wird das Rohr 15 in einer Glühvorrichtung 20, beispielsweise mit einer Hochfrequenz-, Mittelfrequenz- oder Widerstandsheizung, mit derselben Geschwindigkeit, wie es aus dem Walzwerk austritt, im Durchlauf geglüht, anschliessend in einer Kühlvorrichtung 21 gekühlt und in einer Ziehanlage 22 auf den gewünschten Enddurchmesser gezogen, Die Ziehanlage setzt sich aus mehreren Feinziehblöcken 23 zusammen, durch die das Rohr ohne wesentliche Aenderung seiner Wandstärke auf den Enddurchmesser gezogen wird. Der fertige Fülldraht 24 wird in einer Kontrollstation 25 auf vollständige Füllung des Kernes mit dem pulverförmigen Material geprüft und anschliessend in einer Wickelstation 26 auf Haspeln 27 aufgewickelt. Auch hier ist mindestens eine weitere Wickelstation (nicht dargestellt) vorgesehen, damit der Fülldraht 24 von einer vollen Haspel 27 ohne Aenderung der Laufgeschwindigkeit auf die nächste Haspel umgestellt werden kann. Je nach Bedarf kann in dem Fülldraht-Herstellungsprozess ein Verkupferungsbad eingeplant werden (nicht dargestellt).

Grundsätzlich kann mit der beschriebenen Anlage sowohl ein geschweisster als auch ein gefalzter Fülldraht hergestellt werden. Im letzteren Fall wird die Schweissstation durch eine entsprechende Falzstation ersetzt, wobei jedoch die übrigen Teile der Anlage nicht verändert werden müssen. Wird aber ein geschlossener Fülldraht hergestellt, kann durch die in Fig. 2-6 dargestellten Anlageteile eine wesentliche Steigerung der Produktionsgeschwindigkeit bei ebenfalls erhöhter Qualität der Schweissnaht erreicht werden.

In Fig. 2-6 verwendete gleiche Bezugszahlen wie in Fig. 1 bezeichnen dieselben Teile und werden nur dort erläutert, wo dies zum Verständnis erforderlich ist.

Das offene Rohr 7 läuft in Fig. 2 in Pfeilrichtung von links nach rechts. Bei der ersten Pulverdosierwaage 9 wird eine erste Komponente des pulverförmigen Materials, beispielsweise ein ferromagnetisches oder ferritisches Pulver 28 (Fig. 5), das den Boden des Schlitzrohres 7 deckt, dosiert. Durch die nachfolgende zweite Pulverdosierwaage 10 wird eine weitere Komponente, z. B. ein schlackenbildendes Pulver 29, auf die erste Schicht 28 gebracht. Je nach Bedarf können auch mehr als zwei Schichten dosiert werden, wozu eine entsprechende Zahl von Pulverdosierwaagen eingesetzt wird. Das mit dem pulverförmigen Material 28, 29 gefüllte offene Rohr 7 wird in der Kalibrierstation 11 durch Kalibrierwalzen 30, 31 kalibriert und tritt in die Schweissstation 12 ein, von der nur die Induktionsspule 32 dargestellt ist, die um einen rohrförmigen Stutzen 33 angeordnet ist, der sich mit Spiel um das Rohr 7 legt und aus einem warmfesten, z. B. keramischen Material, besteht. Auf dem eintrittsseitigen Ende des Stutzens 33 ist ein, z. B. zweiteiliges Gehäuse 34, vorzugsweise aus Kunststoff, aufgesetzt, das einen engen Durchgang 35 für das Schlitzrohr 7

bildet, siehe Fig. 3. Aus Fig. 3 ist weiter ersichtlich, dass über der Oeffnung des Schlitzrohrs 7 zwei Leitungen 36, 37 vom Durchgang 35 abzweigen, die zusammen mit je einer ebenfalls im Gehäuse 34 angeordneten Treibleitung 38 einen Strahlapparat bilden. Wird die Treibleitung 38 mit Druckluft oder -wasser beaufschlagt, wird in den Leitungen 36, 37 ein Saugzug erzeugt, durch den Luft aus dem offenen Rohr 7 abgesaugt wird. Anstelle von Strahlapparaten kann auch eine Vakuumpumpe eingesetzt werden, die ebenfalls eine dosierte Luftabführung erlaubt.

Mit der Absaugung der Luft aus dem offenen Rohr 7 durch die Saugleitungen 36, 37 der beiden Strahlapparate wird in überaschender Weise eine wesentliche Verbesserung der Qualität der nachfolgend herzustellenden Schweissverbindung erreicht. Durch das bewegte Schlitzrohr 7 wird eine in gleicher Richtung verlaufende kalte Luftströmung erzeugt, während das nach dem Schweissen geschlossene Rohr 15 einen enger werdenden Kanal 39 (Fig. 6) bildet, so dass in diesem eine entgegen der Rohrbewegung gerichtete erwärmte, aber staubhaltige Luftströmung entsteht. Diese beiden entgegengesetzt wirkenden Luftströme werden nun durch die beiden Saugleitungen 36, 37 abgesaugt. Durch diese Luftabsaugung werden Pulverteilchen, die sich an den Längskanten des Schlitzrohres 7 festsetzen könnten, abgesaugt, so dass dadurch einwandfreie Bedingungen zum Verschweissen der beiden Längsränder des offenen Schlitzrohres 7 geschaffen werden. Aus Fig. 4 ist noch der Schweissvorgang verdeutlicht. Das nach oben offene Schlitzrohr 7 wird an den Längskanten durch den induzierten HF-Strom erwärmt, worauf die Verschweissung in der Stauch-Walz-Station 13 erfolgt, wobei der Schweisspunkt 42 im Bereich des kleinsten Abstandes von Stauchwalzen 40, 41 liegt.

Bei der Hochfrequenz-Schweissung (Frequenz 100-500 kHz) fliesst im Schlitzrohr 7 ein Wechselstrom, von dem der um das Rohr fliessende Teil einen Verluststrom darstellt, während nur die Strombahnen längs des Schlitzes für den Schweissprozess wirksam sind. Nun ist es bekannt, den Strom mit Hilfe eines Impeders im Rohrinnern zu konzentrieren, der im wesentlichen ein aus ferritischem Material bestehender Stab ist und wie ein Eisenkern in einer Magnetspule wirkt. Wird der Impeder in der Schweissstation 12 in dem offenen Schlitzrohr 7 angeordnet, kann zwar die Leistung des HF-Generators bei gleichbleibender Schweissleistung verringert werden. Nachteilig ist jedoch, dass der Impeder sich stark erwärmt und deshalb im Dauerbetrieb eine Kühlung benötigt, wodurch der Einsatz eines Impeders umständlich wird. Es wurde nun überaschend festgestellt, dass der bekannte Impeder ersetzt werden kann, wenn bei der Dosierung des pulverförmigen Materials eine ferritische oder ferromagnetische Komponente, z. B. als Schicht 28 in das Schlitzrohr 7 eingebracht wird. Dieser durch das Pulver 28 gebildete Impeder liegt zwar nicht im Zentrum des Rohres 7, doch ist der Gewinm an Schweissleistung in ähnlicher Grössenordnung wie beim

bekannten Impeder. Auf das Pulver 28 wird zweckmässig mindestens eine nichtmagnetische Komponente 29 eingebracht, durch die das ferromagnetische Pulver 28 von einem Transport an die Längskanten des Schlitzrohres 7 zurückgehalten wird. Die Komponente 28 aus einem ferritischen oder ferromagnetischen Pulver entspricht somit einem unendlich langen Impeder, der wegen seiner dauernden Erneuerung in dem bewegten Schlitzrohr 7 keine Kühlung benötigt.

Durch das beschriebene Verfahren und die beschriebene Vorrichtung wird die Qualität der Schweissnaht auch bei grossen Schweissgeschwindigkeiten bis etwa 50 m/Min. verbessert. Dies wird durch die dosierte Absaugung der vom geöffneten Rohr mitgeführten kalten Luftströmung einerseits und durch die dosierte Absaugung der durch Staubpartikel verunreinigten Rückluftströmung im enger werdenden Kanal 39 des geschlossenen Rohres 15 andererseits erreicht, welche Strömung eine hohe Temperatur aufweist. Die Absaugvorrichtung mit einer, zwei oder mehr Absaugleitungen verhindern, dass die zwei, in Stärke und Temperatur unterschiedlichen Luftströmungen beim Zusammentreffen das Pulver zwischen die Längskanten des offenen Schlitzrohrs 7 verwirbeln. Durch die Absaugung wird weiter der Schutz gegen elektrischen Ueberschlag zwischen Induktionsspule und Rohr sowie ein Schutz gegen Verschmutzung der Induktionsspule erreicht. Im weitern wird durch die Verwendung eines ferritischen oder ferromagnetischen pulverförmigen Impeders, der im Grund des Schlitzrohres 7 liegt, die Schweissleistung verbessert. Die gleiche Wirkung wird erreicht, wenn anstelle des pulverförmigen Impeders ein Draht oder ein Stab in den Grund des Schlitzrohrs 7 eingelegt wird. Die Einlage eines pulver-, draht- oder stabähnlichen Impeders hat in Verbindung mit oder ohne Absaugung ihre Vorteile nicht nur bei der Herstellung eines Fülldrahtes, sondern auch bei der Rohrherstellung ohne Füllmaterial, weil die Einlage wiederholt eingesetzt werden kann. Die Absaugung erlaubt aber auch mit gleichem Erfolg die Verwendung von anderen pulverförmigen Materialien, z. B. von agglomerierten Materialien oder Gemischen, die je nach Bedarf ferritische oder ferromagnetische Komponenten aufweisen. Die schichtweise Anordnung der Komponenten stellt hierbei eine besonders günstige Lösung dar.

Das beschriebene Verfahren und die beschriebene Anlage eignen sich für die Herstellung von Zusatzwerkstoffen für die Schutzgas-, Metall-Lichtbogen-, Lichtbogenband-, Unterpulver-, Elektroschlacke- und Elektrogas-Schweissung sowie für Impf- und Modifikationsdrähte für die Verwendung in der metallurgischen Verfahrenstechnik. Zudem besteht keine Einschränkung bezüglich der Geometrie des zu fertigenden Fülldrahtes oder Rohres.

**Patentansprüche**

1. Verfahren zur kontinuierlichen Herstellung eines aus einem Metallrohr und einer pulverförmigen Materialfüllung zusammengesetzten, geschweissten oder gefalzten Fülldrahtes beliebiger Länge, der aus einem metallischen Band (3) als ein im Scheitel offenes Schlitzrohr (7) geformt wird, in welches während seines kontinuierlichen Vorschubes das pulverförmige Material eingebracht und welches durch Stauchen und durch Schweissen oder Falzen seiner Längskanten zu einem, die Materialfüllung einschliessenden Rohr (15) ausgebildet wird, das dann auf einen kleineren Durchmesser zur Bildung des Fülldrahtes reduziert wird, dadurch gekennzeichnet, dass während des Schweissens oder Falzens des Rohres die im Schlitzrohr (7) und im geschlossenen Rohr (15) entstehenden Luftströmungen im Bereich der Schweiss- oder Falzzone abgesaugt werden.

2. Verfahren nach Anspruch 1, dadurch gekennzeichnet, dass das pulverförmige Material, in Vorschubrichtung des Rohres gesehen, vor der Luftabsaugungsstelle in das Schlitzrohr (7) eingebracht wird.

3. Verfahren nach Anspruch 1 oder 2, dadurch gekennzeichnet, dass das pulverförmige Material als Trockengemisch in nichtagglomeriertem oder agglomeriertem Zustand oder im einer Kombination dieser beiden Pulverzustände eingebracht wird.

4. Verfahren nach Anspruch 3, dadurch gekennzeichnet, dass das pulverförmige Material, vorzugsweise aus ferromagnetischen und nichtmagnetischen Komponenten, in aufeinanderfolgenden Teildosierungen in das Rohr eingebracht und dadurch eine lagenweise Anordnung verschiedener Materialien erreicht wird.

5. Verfahren nach Anspruch 1 oder 2, dadurch gekennzeichnet, dass das Rohr (15) nach dem Schweissen oder Falzen durch Walzen in den Bereich des Enddurchmessers oder auf den Enddurchmesser (24) reduziert wird.

6. Verfahren nach Anspruch 1 oder 2, dadurch gekennzeichnet, dass das Rohr (15) nach dem Schweissen oder Falzen durch Walzen und nachfolgendes Ziehen auf den Enddurchmesser (24) reduziert wird, wobei das Rohr nach dem Walzen im Durchlauf geglüht wird.

7. Vorrichtung mit einer Schweiss- oder Falz-Station (12) zur kontinuierlichen Herstellung eines aus einem Metallrohr und einer pulverförmigen Materialfüllung zusammengesetzten, geschweissten oder gefalzten Fülldrahtes beliebiger Länge, der zum Einbringen der Materialfüllung aus einem metallischen Band als ein im Scheitel offenes Schlitzrohr (7) geformt ist und der durch Stauchen und durch Schweissen oder Falzen seiner Längskanten zu einem, die Materialfüllung einschliessenden Rohr (15) ausgebildet wird, dadurch gekennzeichnet, dass vor der Schweiss- oder Falz-Station (12) mindestens eine Absaugvorrichtung (34, 35, 36, 37, 38) angeordnet ist, deren Saugrohr (36, 37) über dem Ende des offenen Rohres (7) liegt.

8. Vorrichtung nach Anspruch 7, dadurch gekennzeichnet, dass die Absaugvorrichtung ein Saugrohr oder mehrere Saugrohre (36, 37) besitzt, die in einem das Rohr (7) umgebenden Gehäuse (34) liegen.

9. Vorrichtung nach Anspruch 7 oder 8, mit einer ein HF-Schweissgerät aufweisenden Schweiss-Station (12), dadurch gekennzeichnet, dass das HF-Schweissgerät einen zwischen einer HF-Spule (32) und dem Schlitzrohr (7) liegenden Stutzen (33) aufweist, an dessen der Zulaufseite des Schlitzrohres (7) zugewandten Ende die Absaugvorrichtung (34-38) befestigt ist.

10. Vorrichtung nach einem der Ansprüche 7 bis 9, dadurch gekennzeichnet, dass der Schweiss- und Falz-Station (12) ein Streck-Reduzier-Walzwerk (17) nachgeschaltet ist, das zur Reduktion des Rohrdurchmessers in den Bereich des Enddurchmessers oder auf den Enddurchmesser des Fülldrahtes mindestens zehn Walzgerüste (19) aufweist.

11. Vorrichtung nach Anspruch 10, dadurch gekennzeichnet, dass dem Walzwerk (17) eine Glühvorrichtung (20) nachgeordnet ist, mit dem die Glühbehandlung des aus dem Walzwerk austretenden Rohres (15) im Durchlauf mit derselben Geschwindigkeit wie die Walzwerkaustrittsgeschwindigkeit durchführbar ist.

12. Vorrichtung nach Anspruch 11, dadurch gekennzeichnet, dass die Glühvorrichtung eine Hochfrequenz-, Mittelfrequenz- oder Widerstandsheizung aufweist.

**Claims**

1. Process for continuous manufacture of a welded or folded filled wire of any length constructed of a metal tube and a powdery material filling which is formed from a metal strip (3) as a slit tube (7) open at its apex in which during its continuous feed forward the powdery material is introduced and which by pressing and by welding or folding along its longitudinal edges is formed to a tube (15) enclosing the material filling which is then reduced to a smaller diameter to form the filled wire characterised in that during the welding or folding of the tube the air streams arising in the slit tube (7) and in the closed tube (15) are sucked away in the region of the welding or folding zone.

2. Process according to claim 1 characterised in that the powdery material seen in the feed direction of the tube is introduced into the slit tube (7) before the air sucking away position.

3. Process according to claim 1 or 2 characterised in that the powdery material is introduced as a dry mixture in non-agglomerated or agglomerated condition or in a combination of these two powder conditions.

4. Process according to claim 3 characterised in that the powdery material, preferably of ferromagnetic and non-magnetic components, is introduced in successive partial meterings into the tube and thereby a layer type arrangement of different materials is achieved.

5. Process according to claim 1 or 2 character-